# EUROPEAN PATENT SPECIFICATION

(11) **EP 1 481 296 B1**
(45) Date of publication and mention of the grant of the patent: **18.10.2006**
(21) Application number: 02728323.3
(22) Date of filing: 04.03.2002
(51) Int. Cl.: G05B 19/042, H04L 29/06

(54) **HOUSEHOLD APPLIANCE WITH COMMUNICATION UNIT FOR EXTERNAL CONTROL**
HAUSHALTSGERÄT MIT KOMMUNIKATIONSEINHEIT ZUR EXTERNEN STEUERUNG
APPAREIL ELECTROMENAGER DOTE D'UNE UNITE DE COMMUNICATION PERMETTANT UNE COMMANDE EXTERNE

(43) Date of publication of application: 01.12.2004
(73) Proprietor: Arçelik A.S., 81719 Istanbul (TR)
(72) Inventor: BAYKUT, Alper, Arçelik A.S., 81719 Istanbul (TR); TACAN, Ilkin, Arçelik A.S., 81719 Istanbul (TR); YÜCE, Ahmet Ihsan, Arçelik A.S., 81719 Istanbul (TR)
(74) Representative: Berkkam, Ayfer
(86) International application number: PCT/TR2002/000009
(87) International publication number: WO 2003/075105

(56) References cited:
- EP-A- 0 684 719
- WO-A-01/63848
- US-A- 5 666 544
- US-A- 5 938 757
- US-A- 6 005 476

## Description

### FIELD OF INVENTION

The present invention is related to a household appliance including a microcontroller with a protocol for enabling the communication among the household appliance, a communication unit and an external device.

### BACKGROUND OF THE INVENTION

In order to control any household appliance externally, a communication is needed. But especially in the household appliances, communication needs similar softwares both in the communicated parts. But the memory capacity on their microprocessor is so small such that only a control program can be recorded in the household appliances generally. So for controlling a household appliance such softwares cannot be recorded on to the microprocessor of the household appliance. So such a communication needs more memory capacity on their microprocessor in addition to the control program and communication rules obeyed by all the communicated parts. This increases the price of the household appliance, and it cannot be applicable to all of the household appliances.

Any connection must have an input / output (I/O) port operation. The port contains a bus interface through which the microprocessor can send commands to the port, read port status, and access input/output data registers in the port. An interrupt line notifies the microprocessor of completion of operation.

In any communication, there is a one to one correspondence between communicated parts, and the communication connection can be in different types, such as serial interfacing. All the interfaces need some protocols for regular communication. For serial I/O, there are some communication protocols that it is a convention for data transmission that include such functions as timing, control, formatting, and data presentation. Depending on the timing of the data on the serial link, protocols can be classified as asynchronous and synchronous. In asynchronous protocols, successive data appear in the data stream at arbitrary times, with no specific clock control governing the relative delays between data. In synchronous protocols, each successive datum in a stream of data is governed by a master clock and appears at a specific interval in time.

Synchronous protocols produce a stream of data at a fixed clock rate with the clock governing not only bits within a character but also character-to-character time. The synchronous protocol has hardware to extract a synchronous clock from incoming data, that is, a more demanding operation than the edge detection used in an asynchronous receiver. This and other factors indicates that synchronous protocols tend to require more complexity in the transmitter and receiver when compared with asynchronous protocols but are more effective users of communication bandwidth.

For error detector and corrector capability of the basic protocols, there are some differences. In asynchronous protocol each message is a single 8 bit datum. One of the data bits can provide a parity check. With one parity check bit, say, a single-bit error or odd number of bit errors is detectable but not correctable. It is possible to impose error-correction and detection capability on sequence of characters through use of parity checks over blocks of data--this is outside the specification of the asynchronous protocol and is therefore incorporated into a system firmware or software and not into the I/O port.

In WO 9800941, In a subscriber loop equipment having a subscriber bus, there is provided an odd data stream carrying a first set of data time slots of an E1 signal and a first set of signalling and control time slots of the E1 signal, and an even data stream carrying a second set of data time slots of the E1 signal and a second set of signalling and control time slots of the E1 signal. The odd and even data streams are bit-interleaved and transported on the subscriber bus.

In WO 0163848 a communications module for an appliance is explained. The module includes a communications protocol translator, which translates signals received from a communications media into appliance controller signals, and appliance control signals received from the appliance controller into a communications protocol pf an appliance communications network. The module may also include a power line transceiver and a power line driver. Alternatively, the module includes a radio frequency transceiver or modem for connection to an appliance network. The appliance includes an appliance controller having a communications port and also includes a cavity for receiving the communications module. A connector is attached to one of the cavity walls. A communications line connects the communications port and the connector. The connector is electrically coupled to the appliance controller or main power supply. A network ready appliance further includes a detachable cover to protect operators from shock. Alternatively, the connector is recessed in a cavity.

In EP0841605, The centre comprises a management station, which controls domestic equipment connected to it via a network. The management station has four read-only memories, which contain communication protocols for each piece of equipment, commands, and applications modules relating to energy management or security and descriptions of equipment types. Entry interfaces transmit user commands to the management station and also receive return messages informing the user of equipment states. Output interfaces transmit commands to equipment and receive returning messages. The management station communicates with the input and output interfaces through bi-directional links.

In US 5579221, A home automation system having a user controlled definition function is operated in response to input of an inherent call code. The system includes power line controller PLC modules for switching power to appliances connected thereto in response to receipt of a control code; monitoring devices for displaying input video information; a video display processing device having a font memory and a video memory for assessing font data corresponding to a character code received from the font memory in response to receipt of the character code and for providing a video signal corresponding to the assessed font data to the monitoring device; a control device for providing to the video display processing device character code corresponding to a user defined number, device name, call code, and control code in response to a set user defined function; the control device also stores the user defined number, the call code, and the control code in an address region corresponding to the user defined number, and transmits the call code and control code in response to input of the user defined number; and an interfacing device for transmitting the call code and control code output from the control device to the power line controller PLC modules.

### SUMMARY OF INVENTION

The object of the invention is to regulate the communication among a household appliance, a communication unit and an external device for controlling the household appliance.

### DRAWINGS OF THE PREFERRED EMBODIMENT

An embodiment of the household appliance, which is realised in order to attain the said object of the invention, is illustrated in the attached drawings, wherein;

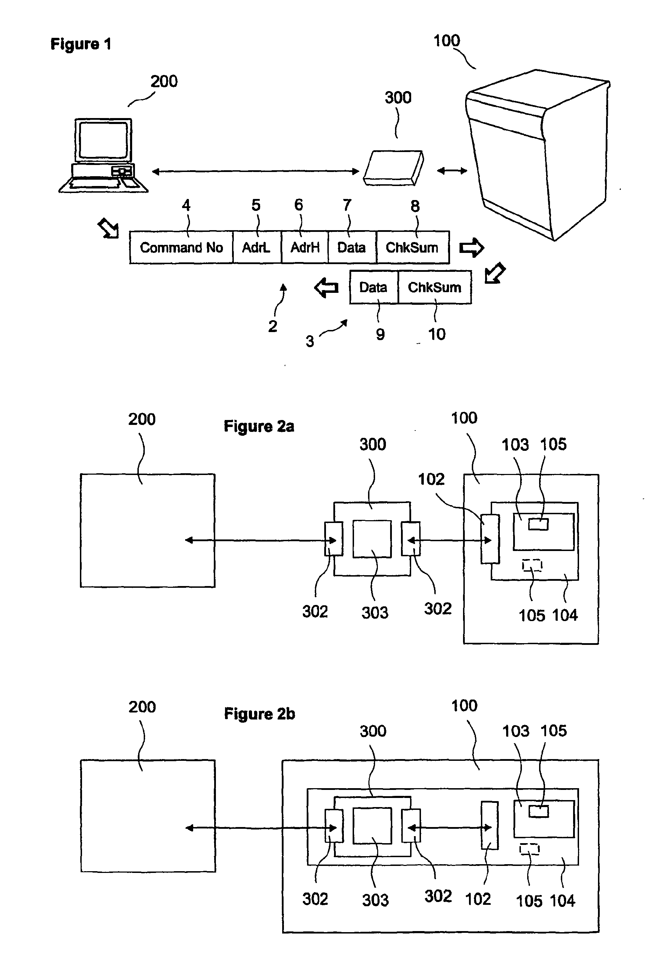

Figure 1, is the schematic view of the protocol packages among a household appliance, a communication unit and an external device
Figure 2a, is the schematic view of a household appliance, a communication unit and an external device
Figure 2b, is the schematic view of an external device and a household appliance which has a communication unit.
Figure 3, is a table defining the commands used in the protocol.

The components shown in the drawings have the following numbers;
2- Send package
3- Reply package
4- CmdT
5- AdrH
6- AdrL
7- S-Data
8- S-ChkSum
9- R-Data
10- R-ChkSum

100- Household appliance
102,302-Connector
103- Microcontroller
104- Electronic control board
105- Memory unit

200- External device

300- Communication unit
303- Interface chip

### DESCRIPTION OF THE PREFERRED EMBODIMENTS

The present invention is related to a household appliance (100) that can be controlled by an external device (200), preferably a computer, and a communication unit (300) for enabling the communication between the household appliance (100) and the external device (200).

The household appliance (100) has at least one electronic control board (104) for controlling it. The electronic control board (104) includes a communication part preferably serial, at least one connector (102), a power supply and a microcontroller (103) with digital pinouts. The microcontroller (103) comprises at least one memory unit (105) such as; a random access memory RAM, and a read only memory ROM. In the preferred embodiment the microcontroller (103) further comprises an electrically erasable program memory EEPROM or an external storage memory, i.e. EEPROM, FLASH RAM or harddisc.

The household appliance memory comprises an array. The said array is defined as a constant memory array, which comprises pointers showing the address of the real memory variables or if it is possible, the variables are defined as in a sequential order so direct addressing mode is possible for serving functionality. This array does not contain a critical byte like controlling to the components of the household appliance (100), but all other information for the status of the household appliance (100) can be acquired through this array.

The communication unit (300) includes one or more than one connector (302) and an interface chip (303) for converting the data obtained from the microcontroller (103) to a data that will be used in the external device (200). The communication unit (300) enables to communicate to different physical communication layers such as RS232 etc. In the preferred embodiment the interface chip (303) enables to convert the digital data obtained from the microcontroller (103) to a serial data that will be used by the external device (200).

The external device (200) comprises, a display unit for displaying the data, one or more than one data entry means for entering data, a communication part for communicating, and a microprocessor for processing.

The microcontroller (103), controls the household appliance (100) with a control algorithm by using the data obtained from the components and/or the sensors of the household appliance (100). This data is partially recorded on the memory unit (105). In order to decrease costs, memory units (105) with smaller capacities are preferred and only some fundamental and instantaneous data are recorded in the memory units (105). In order to control the household appliance (100) externally, the external device (200) needs all the data obtained from the components and/or the sensors of the household appliance (100). For getting the said data, the external device (200) knows the array and/or a priori the addresses on the memory unit (105) where said data is recorded and which defines the locations on the memory unit (105) and/or the junctions for the data obtained from the sensors, components, etc necessary for the controlling of the household appliance (100). The data transfer between the household appliance (100) and the external device (200) is regulated by a protocol, which has communication rules known both by the external device (200) and the household appliance (100). Since the said communication rules need less memory capacity, it can be recorded to the memory unit (105) without any additional memory capacity. Once the communication rules are recorded on both the external device (200) and the household appliance (100), the user commands or requirements can be carried out by the household appliance (100).

In the preferred embodiment, a RS232 protocol with 9600 baud, 1 start bit, 1 stop bit and no parity is used for communicating between the household appliance (100) and the external device (200). The protocol can be used in any network like RS-485, TCPIP, UDPIP, PLC, etc, by using a protocol converter by adding some addresses such as from/to bytes and by changing the interface chip (300) and/or connectors (302) according to the related network type.

The protocol has two different package structures, send package (2) and reply package (3). The send package (2) includes five bytes named as, a Command (CmdT) (4) byte for setting the operation that will be carried out by the microcontroller (103) of the household appliance (100), an Address high byte (AdrH) (5) and an Address low byte (AdrL) (6) for defining the memory locations as a 16 bit memory address, such that 256 x AdrH + AdrL defines the exact location of the memory, a Send Data (S-Data) (7) byte for sending a byte-value from the external device (200) to the household appliance (100) and a Send-Checksum (S-ChkSum) (8) for security purposes which is calculated as a ones complement of the data. The reply package (3) includes two bytes named as a Reply Data (R-Data) (9) which is a resulting byte-value for the requested command and its Reply Checksum (R-ChkSum) (10) for security purposes which is calculated as a ones complement of the data.

The whole packages defines the different types of user requests and related commands, that will be done on different addresses defined by this packages, for processing, by the combinations of information in these packages.

The security of the protocol is provided by an authentication procedure. If the authentication is successful, the generated cryptokey is send by the household appliance (100). This cryptokey is used for encrypting special commands. In the preferred embodiment the authentication procedure is provided whenever it is asked and/or at the beginning of the communication.

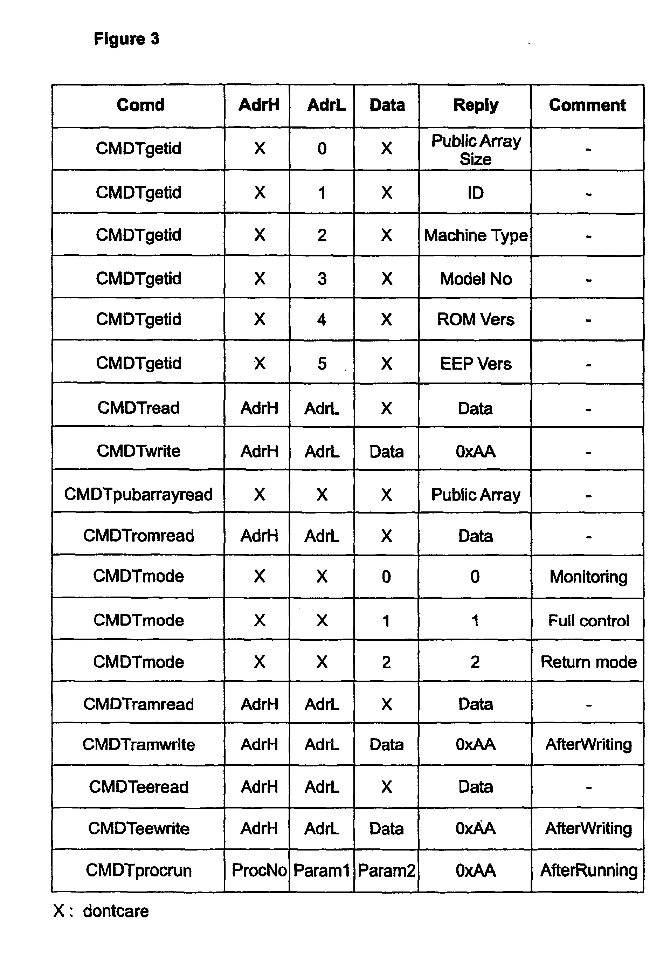

The protocol (1) have different command (4) (CmdT) types; GetID, Set Mode, Read, Write, Public Array Read, Authentication, ROM Read, RAM Read, RAM Write, EEP Read, EEP Write, Proc Run. The combination of the defined parameters in bytes, designates the requested commands (Fig 3).

GetID command is used for reading the identification such as model of the household appliance (100), the software version or the public array size of the household appliance (100) without an user authentication.

Set Mode command is used to change the working mode of the household appliance (100). The possible working modes are; normal mode and control mode. At normal mode the household appliance (100) perfoms the commands of the external device (200) and sends back the responses as soon as possible. At control mode, the household appliance (100) disables all the internal control algorithms and waits for the commands of external device (200) and in this case everything is under control of the external device (200).

Read command is used for reading the byte values from the array. The value, that is sent by the external device (200) at the data part of the package, is dontcare value. The household appliance (100) sends the byte value from a location addressed as AdrL (6) and AdrH (5) in the array. This package is free to access for every attendee, and is sent without an encrypted code.

Write is used for changing the byte values in the array. The byte-value, that is sent by the external device (200), at the send-data part of the package changes the byte-value at the location addressed as AdrL (6) and AdrH (5) in the array of the household appliance (100). The household appliance (100) sends a reply answer; such as, 0xAA for acknowledge. This package is free to access for every attendee, and is sent without an encrypted code.

RAM Read command is used to read a value from the RAM (105). The byte-value of the send data (S-Data) (7) part of the package is dontcare value. The household appliance (100) sends a byte-value from its own RAM's location as reply. The 16-bit real address is coded as low and high bytes as AdrH (5) and AdrL (6) in the package. Since it can reach all tha data in the RAM area, it is an encrypted code.

RAM Write command is used to write a value to the RAM (105). The byte-value that is sent by the external device (200) in the send-data (S-Data) (7) part of the package, is written at the 16-bit adress value given by AdrH (5) and AdrL (6). After the writing process is completed, the household appliance (100) sends as reply answer; such as (0xAA) for acknowledge. Since it can change all tha data in the RAM (105), it is an encrypted code. This type of command is used for autherized users.

EEP Read command is used to read a byte-value from the EEPROM (105). The value of the send-data (S-data) (7) that is a part of the package received from the external device (200) is a dontcare value The household appliance (100) sends the byte-value from the location in the EEPROM (105) as reply. The 16-bit Adress is given by low and high bytes as AdrH (5) and AdrL (6) in the package.

EEP Write command is used to write a byte-value to the EEPROM (105). The byte-value in the data part of the package is written on the household appliance (100), at the 16-bit adress given by AdrH (5) and AdrL (6). After the writing process is completed the household appliance (100) sends a reply answer; such as (0xAA). Since it can change all tha data in the EEPROM (105), it is an encrypted code.

ROM Read command is used to read a value from the ROM (105). The byte-value of the send-data (S-data) (7) part of the package received from the external device (200) is a dontcare value. The household appliance (100) sends the byte-value from the required location of the ROM (105) as reply. The 16-bit Adress is sent low and high bytes in AdrH (5) and AdrL (6) of the package. It is an encrypted code.

Proc Run command is used to run a procedure of the control program of the household appliance (100). The external device (200) sends a package which includes the identification of the procedure to be run, and the parameters. If more than two parameter are needed, then the RAM Read and Ram Write commands is used. After the procedure is completed the household appliance (100) sends a reply answer, such as; 0xAA.

In the preferred embodiment, when the household appliance (100) is reseted, it is started in normal mode. When it gets the first valid package, it assumes that it is connected to the external device (200) and sets the "connected" flag. If the checksum is correct after the data package is received, the household appliance (100) replies in realtime (T replytimeout) for a valid package. If checksum is erroronous it does not reply. If external device (200) does not get any reply altough it waits enough time for the T(reply timeout), it decides that the package sent is not received properly and it resends the same package again. If this error is repeated external device (200) decides that the communication is lost.

In another embodiment of the household appliance (100), the communication unit (300) includes at least one microcontroller especially for communication in addition to the microcontroller (103) on the electronic control board (104).

By using the said protocol (1), the communication unit (300) enables the communication of the external device with the household appliance (200) for controlling, simulating, testing, and emulating. Although the memory capacity of the microcontroller is limited and is mainly used for controlling the household appliance (100), the said protocol (1) does not require any additional memory at the household appliance (100). At the same time the protocol (1) enables the user a higher flexibility for controlling, simulating, testing, and emulating the household appliance (100) by allowing access to its memory in many ways.

## Claims

1. A household appliance (100), which is controlled by
an external device (200) for simulating or emulating or testing the household appliance (100)
through a communication unit (300) for enabling the communication between the household appliance (100) and the external device (200) by transmitting the data from the household appliance (100) to the external device (200) and transmitting the data from the external device (200) to the household appliance (100),
the household appliance comprising an electronic control board (104), which is comprising
a microcontroller (103) for controlling the household appliance (100)
and a tiny and flexible protocol which is located on the microcontroller (103) for regulating the communication among the household appliance (100), the external device (200) and communication unit (300),
**characterised in that** the protocol comprises a send package (2) and a reply package (3) wherein,
the send package (2) includes five bytes named as, a Command (CmdT) (4) byte for setting the operation, an Address high byte (AdrH) (5) and an Address low byte (AdrL) (6) for defining the memory locations as a 16 bit memory address, such that (256 x AdrH + AdrL) for defining the exact location of the memory, a Send Data (S-Data) (7) byte for sending a byte-value from the external device (200) to the household appliance (100) and a Send-Checksum (S-ChkSum) (8) for security purposes which is calculated as a ones complement of the data
and the reply package (3) includes two bytes named as a Reply Data (R-Data) (9) byte which is a resulting byte-value for the requested command and its Reply-Checksum (R-ChkSum) (10) byte for security purposes which is calculated as a ones complement of the data.

2. The household appliance (100) as in Claim 1 **characterized in that** the electronic control board (104) includes the communication unit (300).

3. The household appliance (100) as in Claims 1 and 2 **characterized in that** the communication unit (300) comprises at least one interface chip (303) for converting the data obtained from the microcontroller (103) to a data that will be used in the external device (200), and connectors (302) for connection to the household appliance (100) and the external unit (200).

4. The household appliance (100) as in Claims 1 to 3 **characterized in that** the communication unit (300) includes at least one microcontroller especially for communication.

5. The household appliance (100) as in Claims 1 to 4 **characterized in that** the protocol can regulate the communication by using different types of interface chips (303) and suitable connectors for the said interface chips (303) for enabling the communication on the different physical communication layers such as RS232, RS-485, TCPIP, UDPIP, PLC, wireless LAN etc,

6. The household appliance (100) as in Claim 1 to 5, **characterized in that** the electronic control board (104) transmits the data with one start bit, one stop bit and no parity while using a serial communication.

7. The household appliance (100) as in any one of the claims 1 to 6, **characterized in that** the microcontroller (103) provides the security by an authentication procedure such that if the authentication is successful, the generated cryptokey is send by the household appliance (100) for encrypting special commands.

## Patentansprüche

1. Ein Hausgerät (100), das über eine externe Vorrichtung (200) bedient wird, um das Hausgerät zu simulieren, zu emulieren sowie um das Hausgerät (100) zu testen, durch eine Kommunikationseinheit (300) zum Ermöglichen der Kommunikation zwischen dem Hausgerät (100) und der externen Vorrichtung (200), indem es die Daten von dem Hausgerät auf die externe Vorrichtung (200) überträgt, sowie von der externen Vorrichtung auf das Haushaltsgerät (100),
das Hausgerät umfasst eine elektronische Steuereinheit (104), die eine Mikrosteuerung (103) für die Steuerung des Hausgeräts (100) und ein winziges, flexibles Protokoll, das sich auf der Mikrosteuerung (103) befindet und die Verbindung zwischen dem Hausgerät (100), der externen Vorrichtung (200) und der Kommunikationseinheit (300) reguliert, umfasst,
**dadurch gekennzeichnet dass** das Protokoll ein Versandpaket (2) und ein Antwortpaket (3) umfasst, worin das Versandpaket (2) fünf Bytes umfasst, die Command (CmdT) (4) Byte zum Einstellen des Arbeitsgangs, ein Adress low byte (AdrL) zum Definieren des Speicherplatzes als eine 16 Bit Speicheradresse, eine (256 x AdrH +AdrL) zum Definieren den genauen Platz des Speichers, ein Send Data (S-Data) (7) Byte zum Übertragen der Byte-Wert von der externen Vorrichtung (200) auf das Hausgerät (100) und eine Send-Checksum (S-ChkSum) (8) für Sicherheitszwecke, die als jemands Datenergänzung für DataH kalkuliert wird, genannt sind,
und das Antwortpaket (3) beinhaltet zwei Bytes, die Reply Data (R-Data) (9) Byte, die ein resultierender Byte-Wert für die gewünschte Anweisung ist und ihre Reply-Checksum (R-ChkSum) (10), für Sicherheitszwecke, die als jemands Datenergänzung für die Daten kalkuliert wird, genannt werden.

2. Das Hausgerät (100) nach Anspruch 1, **gekennzeichnet dadurch, dass** die elektronische Steuereinheit (104) die Kommunikationseinheit umfasst (300).

3. Das Hausgerät (100) nach Anspruch 1 und 2, **dadurch gekennzeichnet dass** die Kommunikationseinheit (300) mindestens einen Schnittstellenchip (303) umfasst, zum Konvertieren der von der Mikrosteuerung (103) erlangten Daten in Daten, die in der externen Vorrichtung (200) angewandt werden, und mehrere Steckverbinder ( 302) zum Verbinden an das Hausgerät (100) sowie an die externe Einheit (200).

4. Das Hausgerät (100) nach Anspruch 1 bis 3, **dadurch gekennzeichnet dass** die Kommunikationseinheit (300) mindestens eine Mikrosteuerung hauptsächlich für Kommunikationszwecke umfasst.

5. Das Hausgerät (100) nach Anspruch 1 bis 4, **dadurch gekennzeichnet dass** das Protokoll die Kommunikation regulieren kann, indem es verschiedene Arten von Schnittstellenchip benutzt und entsprechende Steckverbinder benutzt für die erwähnten Schnittstellenchips zum Ermöglichen der Kommunikation auf verschiedenen physischen Kommunikationsebenen wie RS232, RS-485, TCPIP, UDPIP, PLC, wireless LAN usw.

6. Das Hausgerät (100) nach Anspruch 1 bis 5, **dadurch gekennzeichnet dass** die elektronische Steuereinheit (104) die Daten mit einem Bit zum Anfang, mit einem Bit zum Stoppen überträgt, ohne Parität während der Anwendung einer seriellen Kommunikation.

7. Das Hausgerät (100) nach jedem beliebigen Anspruch von 1 bis 6, **dadurch gekennzeichnet dass** es durch ein Authentifikationsverfahren die Sicherheit bietet, bei dem im Falle der erfolgreichen Authentisierung der erzeugte Kryptoschlüssel von dem Hausgerät (100) vermittelt wird, um besondere Anweisungen zu verschlüsseln.

## Revendications

1. Appareil de ménage (100) contrôlé par
un dispositif externe (200) pour simuler ou limiter ou bien tester l'appareil de ménage (100)
à l'aide d'une unité de communication (300) qui établit une communication entre l'appareil de ménage (100) et le dispositif externe (200) en transmettant des données à partir de l'appareil de ménage (100) vers le dispositif externe (200) et à partir du dispositif externe (200) vers l'appareil de ménage (100),
ledit appareil de ménage comportant un panneau de contrôle électronique (104) comportant
d'un micro contrôleur (103) pour assurer le contrôle de l'appareil de ménage (100) et
d'un petit protocole flexible situé sur le micro contrôleur (103) pour la régulation de la communication entre l'appareil de ménage (100), le dispositif externe (200) et l'unité de communication (300),
**caractérisé en ce que** le protocole comportant d'un paquet d'envoi (2) et d'un paquet de réponse (3) dans lesquels,
le paquet d'envoi (2) est formé de cinq octets désignés de la façon suivante : un octet de Command (CmdT) (4) pour le paramétrage de l'opération, un octet de Address high (AdrH) (5) et un octet de Address low (AdrL) (6) pour la définition des positions de mémoire en fonction des adresses de 16 bits (256 x AdrH + AdrL) qui pourraient définir la position exacte de la mémoire, un octet de Send Data (S-Data) (7) pour l'envoi d'une valeur d'octet à partir du dispositif externe (200) vers l'appareil de ménage (100) et un octet de Send-Checksum (S-ChkSum) (8) sous forme de complément de la donnée dataH pour assurer la sécurité,
et le paquet de réponse (3) est formée de deux octets désignés de la façon suivante : un octet de Reply Data (R-Data) (9) se produisant sous forme de valeur d'octet pour la commande requise et un octet de Reply-Checksum (R-ChkSum) (10) sous forme de complément de la donnée pour assurer la sécurité.

2. L'appareil de ménage (100) selon la revendication 1, **caractérisé en ce qu'**il contient un panneau de contrôle électronique (104) muni d'une unité de communication (300).

3. L'appareil de ménage (100) selon les revendications 1 et 2, **caractérisé en ce que** l'unité de communication (300) contient au moins une puce (303) pour transformer la donnée venant du micro contrôleur (103) en une donnée qui sera utilisée dans le dispositif externe (200), et des connecteurs (302) pour assurer la communication entre l'appareil de ménage (100) et l'unité externe (200).

4. L'appareil de ménage (100) selon les revendications 1 à 3 **caractérisé en ce que** l'unité de communication (300) contient au moins un micro contrôleur conçu spécifiquement pour la communication.

5. L'appareil de ménage (100) selon les revendications 1 à 4 **caractérisé en ce que** le protocole peut réguler la communication en utilisant divers types d'interface de puce (303) et des connecteurs appropriés pour lesdits types d'interface de puce (303) pour établir la communication sur divers niveau de communication physiques tels que RS232, RS-485, TCPIP, UDPIP, PLC, wireless LAN etc.

6. L'appareil de ménage (100) selon les revendications 1 à 5 **caractérisé en ce que** le panneau de contrôle électronique (104) transmet la donnée avec un bit de déclenchement et un bit d'arrêt, sans aucun bit de parité dans le cas de communication à travers le port de série.

7. L'appareil de ménage (100) selon les revendications 1 à 6 **caractérisé en ce que** le micro contrôleur (103) assure une sécurité par une procédure d'authentification de sorte que si ladite authentification est réussie, la clé encodée fournie est envoyée par l'appareil de ménage (100) pour l'encodage spécifique des commandes.
